# EUROPÄISCHE PATENTSCHRIFT

(11) **EP 4 255 664 B1**
(45) Veröffentlichungstag und Bekanntmachung des Hinweises auf die Patenterteilung: **26.06.2024**
(21) Anmeldenummer: 21810357.0
(22) Anmeldetag: 16.11.2021
(51) Int. Cl.: B23K 26/0622, B23K 26/00, B23K 26/34, B23K 26/38, B23K 101/36, B23K 103/10, B23K 103/12

(54) **VERFAHREN ZUR FOLIENBESCHICHTUNG MITTELS LASER**
FILM COATING METHOD USING A LASER
PROCÉDÉ DE REVÊTEMENT PAR FILM À L'AIDE D'UN LASER

(30) Priorität: 02.12.2020 DE 102020131954
(43) Veröffentlichungstag der Anmeldung: 11.10.2023
(73) Patentinhaber: Auto-Kabel Management GmbH, 79688 Hausen i.W. (DE)
(72) Erfinder: BITNER, Urszula, 79541 Lörrach (DE); REDDER, Marie, 9642 Ebnat-Kappel (CH); SEBETLELA, Kabelo, 84028 Landshut (DE)
(74) Vertreter: Cohausz & Florack
(86) Internationale Anmeldenummer: PCT/EP2021/081761
(87) Internationale Veröffentlichungsnummer: WO 2022/117324

(56) Entgegenhaltungen:
- EP-A1- 1 514 634
- WO-A1-2020/120726
- DE-A1-102004 002 268
- JP-A- 2014 140 890
- US-A- 4 772 773
- US-A1- 2018 045 232
- US-A1- 2020 324 362
- LI YINGQI ET AL: "Building metallic glass structures on crystalline metal substrates by laser-foil-printing additive manufacturing", JOURNAL OF MATERIALS PROCESSING TECHNOLOGY, ELSEVIER, NL, Bd. 248, 26. Mai 2017 (2017-05-26), Seiten 249-261, XP085062347, ISSN: 0924-0136, DOI: 10.1016/J.JMATPROTEC.2017.05.032

## Beschreibung

Der Gegenstand betrifft ein Verfahren zur selektiven Beschichtung von Metallteilen, bei dem mittels Laser eine auf einem Metallteil aufliegende Folie mit diesem verschweißt wird, sowie ein nach diesem Verfahren hergestelltes Metallteil.

Im Zuge der fortschreitenden Elektrifizierung der Mobilität werden zunehmend hohe Ströme über Kabel in Kraftfahrzeugen übertragen. Dies stellt hohe Anforderungen an die Kabel selbst, aber auch insbesondere an Übergänge zwischen Kabeln und Kontaktelementen und an Übergänge zwischen Kabeln untereinander.

Solche Übergänge werden in der Regel durch verschiedene Arten von Verbindungen realisiert. Gängig sind hierbei Schweißverbindungen einerseits und Schraubverbindungen, Klemmverbindungen und/ oder verpresste Verbindungen, im Folgenden allgemein Kraftverbindungen genannt, andererseits. Die Verbindungsart ist jeweils angepasst an die Anforderungen der Verbindung, beispielsweise sind Schweißverbindungen gut geeignet als permanente Verbindungen mit geringem Übergangswiderstand. Kraftverbindungen wiederrum können zum Zeitpunkt der Montage geschlossen werden und auch zu einem späteren Zeitpunkt wieder gelöst werden. Kraftverbindungen können aber nicht die gleiche Güte des elektrischen Übergangswiderstands bieten, haben also ggf. einen höheren ohmschen Widerstand.

Oft ist es notwendig, ein und dasselbe Bauteil mittels verschiedener Verbindungsarten zu anderen Elementen zu verbinden. Beispielsweise können dies Bauteile sein, die als Anschlussteile am Ende eines Kabels fungieren, beispielsweise Kabelschuhe. Oft sind einerseits eine Schweißverbindung und andererseits eine lösbare Verbindung, insbesondere eine Kraftverbindung, am selben Bauteil notwendig und vorgesehen.

Die jeweiligen Verbindungen stellen unterschiedliche Anforderungen an die zu verbindenden Komponenten. Insbesondere stellen sie Anforderungen an die Oberflächenbeschaffenheit der Komponenten im Bereich der Verbindung. So ist für eine Schweißverbindung insbesondere eine reine, d.h. nicht verunreinigte, glatte Oberfläche notwendig. Somit kann ein möglichst homogenes Schweißergebnis mit hoher mechanischer Stabilität und geringem elektrischen Widerstand erreicht werden.

Kraftschlüssige Verbindungen (Kraftverbindungen) stellen dahingegen insbesondere mechanische Anforderungen an die zu kontaktierenden Komponenten. Diese müssen zum einen Druck aufnehmen können. Das Material der involvierten Komponenten sollte also nicht zu weich sein, um sich nicht zu sehr bei der Verbindung zu verformen. Auch ist es allerdings von Vorteil, wenn die Oberfläche der kontaktierten Komponenten im Bereich der Verbindung zumindest in ihrer obersten Schicht relativ duktil ist. Auf diese Weise lässt sich eine möglichst großflächige Kontaktierung erreichen, da Unebenheiten durch die sich bei Krafteinwirkung verformende Oberfläche ausgeglichen werden. Hinzu kommen Anforderungen an die Materialkombinationen zwischen Kontaktteil und mit diesem zu kontaktierenden Elementen, welche im Bereich der Verbindung in direkten Kontakt zueinander kommen. So ist es vorteilhaft, sortenreine Verbindungen an den sich kontaktierenden Oberflächen vorzusehen, um Kontaktkorrosion insbesondere zwischen Metallen verschiedener Redox-Potentiale zu vermeiden.

Um die Oberfläche eines Kontaktteils auf die jeweilige Verbindungsart vorzubereiten, wird diese oft vor der Kontaktierung beschichtet. Hierzu ist es gängig, Kontaktteile aus einem ersten Material in einem ersten Schritt ganzheitlich mit einem zweiten Metall zu beschichten. D.h. das Kontaktteil ist im Wesentlichen von allen Seiten mit einer Schicht eines zweiten Materials beschichtet. Somit ist die Oberfläche des Kontaktteils für einen bestimmten Verbindungstyp vorbereitet, für den die aufgebrachte Beschichtung günstig ist. Die Beschichtung kann durch Anpassung an das Material des zu kontaktierenden Elements eine sortenreine Verbindung ermöglichen. Auch kann die Oberfläche die mechanischen Eigenschaften der Oberfläche einstellen, diese etwa härter oder weicher als das Trägermaterial machen. Auch kann die Beschichtung die chemischen Eigenschaften der Oberfläche des Kontaktteils einstellen, das Redox-Potential, die Oxidierbarkeit, etc.

Eine Beschichtung ist nicht nur für Kontaktteile relevant. Der Bereich, an dem die Beschichtung aufgebracht wird, richtet sich nach den Anforderungen des Metallteils. Beispielsweise können Bereiche beschichtet werden, die später im eingebauten Zustand besonderen chemischen, mechanischen, und/oder elektrischen Beanspruchungen ausgesetzt sind. Auch kann die Beschichtung beispielsweise in einem Bereich angeordnet sein, in dem ein Werkzeug bei der Montage oder aber auch bei der Erstellung der Verbindung ansetzt. So kann beispielsweise der Bereich, in dem eine Sonotrode und/oder ein Amboss eines Ultraschallschweißgerätes ansetzt, beschichtet sein. Hierbei kann z.B. durch den Einsatz einer duktilen Beschichtung die Abrasion der Sonotrode und/oder des Amboss verringert werden.

Eine ganzheitliche Beschichtung ist relativ einfach zu realisieren. Dennoch ist oft, wie oben beschrieben, eine zweite Verbindung an dem Kontaktteil vorgesehen. Diese kann andere Anforderungen an die Oberfläche stellen. Insbesondere kann der reine Ausgangsstoff des Kontaktteils, wie er vor der Beschichtung erreichbar war, besser für die zweite Verbindung geeignet sein als die beschichtete Oberfläche. Dies kann insbesondere der Fall sein bei Schweißverbindungen. Oft wird deshalb das Grundmaterial, aus dem das Kontaktteil hauptsächlich geformt ist, nach Beschichtung wieder freigelegt. Hierzu werden Beschichtungen häufig lokal wieder entfernt, um das unter der Beschichtung liegende Material wieder freizulegen.

Konkret ist es beispielsweise denkbar, ein Metallteil aus einem ersten Metallwerkstoff, beispielsweise Kupfer, mittels eines galvanischen Beschichtungsverfahrens ganzheitlich, d.h. im Wesentlichen von allen Seiten, mit einer dünnen Schicht eines zweiten Metallwerkstoffs einzukleiden. Dieser kann beispielsweise ein duktiler Metallwerkstoff, beispielsweise Nickel oder Zinn, sein. Die Oberfläche ist nun für eine Kraftverbindung vorbereitet. Für eine Schweißverbindung soll nun allerdings wieder das reine Kupfer verschweißt werden. Um den Zugriff darauf wieder herzustellen, wird nun in einem zweiten Schritt die Beschichtung lokal entfernt, beispielsweise mittels eines Ätzverfahrens, eines Entschichtungslasers, einer mechanischen Abtragung, etc.

Das Problem des beschriebenen Vorgehens ist, dass eine Entfernung/Abtragung einer Beschichtung nie perfekt gelingt und die Oberfläche nach der Entfernung/Abtragung nicht so rein ist, wie vor der Beschichtung. Oft bleiben nach der Entfernung/Abtragung Rückstände der Beschichtung und/ oder des Werkzeuges zurück. Auch ist häufig die Oberfläche des Materials nicht mehr so glatt wie vor den Schritten der Beschichtung und Abtragung. Auch sind die Schritte teils aufwändig (Ätzen) und gliedern sich nicht problemlos in eine Produktionskette ein.

Zwar ist eine lokale Abdeckung des Metallteils vor Beschichtung möglich, die nach dem Beschichtungsschritt wieder entfernt werden. Dies stellt jedoch einen aufwändigen Prozessschritt dar, der die Produktionskosten für den von Kostendruck geprägten Markt zu stark anheben würde.

DE 10 2004 002268 A1 offenbart ein Verfahren zur Oberflächenbehandlung eines Werkstücks durch einen pulverförmigen Zusatzwerkstoff mittels eines Schweißstrahls gemäß des Oberbegriffs des Anspruchs 1.

Daher lag dem Gegenstand die Aufgabe zugrunde, ein Metallteil günstig lokal zu beschichten, ohne die Oberfläche der nicht beschichteten Bereiche zu verändern.

Diese Aufgabe wird gelöst durch ein Verfahren nach Anspruch 1.

Gegenständlich ist erkannt worden, dass eine lokale Beschichtung eines Metallteils möglich ist, in dem eine Metallfolie mit einem Laser auf das Metallteil aufgeschweißt wird.

Zunächst wird hierfür ein Metallteil bereitgestellt. Das Metallteil kann aus einem Vollmaterial gebildet sein, insbesondere aus einem einzigen Metallwerkstoff wie Kupfer oder Kupferlegierungen oder Aluminium oder Aluminiumlegierungen. Auch ist es möglich, dass das Metallteil aus mehreren verschiedenen Metallwerkstoffen, insbesondere zwei verschiedenen Metallwerkstoffen gebildet ist. Auch ist es möglich, dass das Metallteil nicht aus einem Vollmaterial geformt ist, sondern Hohlräume aufweist. Auch kann das Metallteil nur teilweise aus einem Metall und teilweise aus einem anderen Material, etwa einem Nicht-Leiter gebildet sein. So kann ein Nicht-Leiter beispielsweise als Trägermaterial fungieren und der Metallwerkstoff als leitendes Kontaktmaterial.

Das Metallteil kann gegossen sein, aus einem Blech gestanzt, ausgeschnitten, gefräst, geschmiedet oder dergleichen sein. Seine Form ist vorzugsweise zumindest bereichsweise im Wesentlichen quaderförmig. Auch sind zumindest teilweise runde Querschnitte möglich. Auch kann das Metallteil ein Blech sein, ein Kabel, ein Teil einer Maschine, etwa ein Kolben, Bolzen, eine Klappe, etc. Das gegenständliche Verfahren ist also nicht auf Anschlussteile beschränkt. Ein Resultat des Verfahrens, eine lokale Anpassung des Oberflächenmaterials eines Metallteils, ohne andere Bereiche der Oberfläche zu verändern, ist für viele verschiedene metallene Bauteile relevant.

An dem Metallteil können Anschlussbereiche für kraftschlüssige Verbindungen einerseits vorgesehen sein. Dies können Anschlussterminals sein, beispielsweise Hülsen, Laschen, Kabelschuhe, Löcher mit oder ohne Gewinde, Bolzen, etc., auf denen Elemente eingepresst, angepresst, verpresst, verschraubt, vernietet, eingeklemmt, steckverbunden oder sonst wie durch Druck verbunden werden können. Diese Bereiche können auch je nach Verbindungsart Auflagebereiche, Anschraubbereiche, etc. genannt werden. Erfindungsgemäß weist das Metallteil einen Auflagebereich auf, welcher ein Loch aufweist und welcher zumindest teilweise ein Anschraubbereich ist.

Auch können Anschlussbereiche für Schweißverbindungen vorgesehen sein. Dies können Bereiche auf der Oberfläche des Metallteils sein und/ oder gesonderte Anschlussterminals wie Laschen, Bolzen, Hülsen, Kabelschuhe, etc. Die Oberfläche des Metallteils kann für die Schweißverbindungen vorbereitet sein. Sie kann hierfür beispielsweise aufgeraut sein, etwa Rippen, Noppen, Rillen, oder anderweitig aufgeraute Oberflächenstrukturen aufweisen. Auch kann die Oberfläche geglättet sein, insbesondere gebürstet, geschliffen und/oder poliert sein. Und/ oder die Oberfläche kann gereinigt sein. Für eine Verbindung kann das Metallteil im Bereich der Schweißverbindung auch eine Ausnehmung aufweisen.

Ein weiterer Aspekt des gegenständlichen Verfahrens umfasst das Bereitstellen einer Folie. Die Folie, welche später mit dem Metallteil zumindest teilweise verbunden werden wird, kann eine Metallfolie sein. Diese kann beispielsweise eine Dicke von 1µm, 3µm, 10µm, 30µm oder 100µm aufweisen.

Diese Beschichtungsdicke kann auch durch das selektive Laserbeschichten erreicht werden, wobei diese durchs Auftragsschweißen einer Folie auf dem Metallteil realisiert werden kann. Hierbei ist zu beachten, dass die Dicke der verwendeten Folie nicht direkt der Dicke der Beschichtung entsprechen muss. Vielmehr kann abhängig von der Einstellung des Laserstrahls die endgültige Beschichtung dünner oder dicker als die ursprüngliche Folie sein. Ist die Beschichtung dünner als die verwendete Folie, wird ein Teil des Folienmaterials während des Beschichtungsprozesses verdampft. Ist die Beschichtungsdicke größer als die Dicke der Folie, wird die Folie durch die thermische Wirkung des Laserstrahls in einer Längsrichtung geschrumpft, wobei jedoch das Volumen des Folienmaterials gleich oder geringer ist. Daraus folgt, dass das Volumen der per Laser aufgetragener Beschichtung im Vergleich zum Volumen der ursprünglichen Folie gleichbleibend ist.

Die Dicke der Folie kann an die jeweilige Verbindung angepasst sein. So kann etwa für eine rein chemische Schutzwirkung der Oberfläche eine dünne Beschichtung im Bereich weniger Mikrometer, insbesondere zwischen 5 µm und 20µm ausreichen. Für eine mechanische Funktion andererseits, wenn die Oberfläche beispielsweise eine statische und/oder dynamische Kraft aufnehmen muss, beispielsweise als Auflagefläche einer Sonotrode für das Ultraschallschweißen, kann eine dickere Beschichtung im Bereich 30 bis 100µm vorteilhaft sein. So wird vermieden, dass die Beschichtung beschädigt wird und das darunter liegende Material freigelegt wird. Auch kann die Schichtdicke an das verwendete Material der Folie angepasst sein.

Die Metallfolie kann aus Metallwerkstoffen wie Zinn, Nickel, Kupfer, Aluminium, Silber oder Gold oder Legierungen von diesen geformt sein. Der Metallwerkstoff der Folie kann dabei an den Metallwerkstoff des Metallteils angepasst sein. Insbesondere kann der Metallwerkstoff der Folie mit dem Werkstoff des Metallteils übereinstimmen. Vorteilhafterweise ist die Folie aus einem anderen Metallwerkstoff geformt als das Metallteil. Auf diese Art und Weise können die mechanischen, elektrischen und/ oder chemischen Eigenschaften der Oberfläche des Metallteils im Bereich der Beschichtung verschieden von denen an den unbeschichteten Bereichen der Oberfläche des Metallteils sein.

Es ist auch möglich, dass die Folie aus zwei oder mehr aufeinander angeordneten Schichten verschiedener Metallwerkstoffe gebildet ist. Diese Metallschichten können zumindest bereichsweise bereits stoffschlüssig miteinander verbunden sein, oder kraftschlüssig aufeinander gepresst oder laminiert sein, oder lediglich übereinander gelegt sein.

In einer vorteilhaften Ausgestaltung ist der Metallwerkstoff der Folie aus einem duktileren Material als das Metallteil selbst. Er hat also eine geringere Härte als der Metallwerkstoff des Metalls. Die Härte des Materials kann mittels des Martens Verfahrens DIN EN ISO 14577, dem Rockwell Verfahrens DIN EN ISO 6508-1, des Brinell Verfahrens EN ISO 6506-1 bis EN ISO 6506-4 und/ oder anderer Verfahren bestimmt werden.

Dies hat insbesondere den Vorteil bei Kraftverbindungen, dass diese einen großflächigeren Kontakt herstellen können. Denn die duktile Oberfläche verformt sich bei Krafteinwirkung. So können insbesondere Unebenheiten der kontaktierenden Flächen von Metallteil einerseits und zu kontaktierendem Element andererseits ausgeglichen werden. Es kann somit vermieden werden, dass der Kontakt nur an aus den Kontaktflächen von Metallteil und zu kontaktierendem Element hervorstehenden Bereichen erreicht wird. Der großflächigere Kontakt verringert den elektrischen Übergangswiderstand zwischen Metallteil und zu kontaktierendem Element.

Auch ist es möglich, dass der Metallwerkstoff der Beschichtung nach seinen chemischen Eigenschaften, insbesondere dem Redox-Potential ausgewählt wird. So kann ein bimetallisches Kontaktteil aus dem erstem Metallwertsoff des Metallteils einerseits und dem Metallwerkstoff der Beschichtung andererseits hergestellt werden. Insbesondere kann der Metallwerkstoff der Beschichtung an den Materialwerkstoff des zu kontaktierenden Elements angepasst sein. Diese können insbesondere im Wesentlichen gleich sein. Durch die Anpassung der beiden Metallwerkstoffe kann Kontaktkorrosion zwischen einem Kontaktteil eines ersten Werkstoffes und einem zu kontaktierenden Element eines zweiten, anderen Metallstoffs mittels einer im verbundenen Zustand zwischen diesen beiden angeordneten Beschichtung vermieden werden.

Für das gegenständliche Verfahren wird die Folie in einem Auflagebereich an einer Seite des Metallteils auf dem Metallteil positioniert. Diese kann nach dem Auflegen zumindest in Teilen des Auflagebereichs im Wesentlichen ohne Lufteinschlüsse auf dem Metallteil aufliegen. Auch ist es möglich, dass die Folie das Metallteil zunächst nur zu kleinen Anteilen kontaktiert. Die Oberfläche des Metallteils ist im Auflagebereich und ggf. in Bereichen nahe des Auflagebereichs im Wesentlichen flach. Auch ist es möglich, dass die Oberfläche gebogen, insbesondere konvex und/ oder konkav, ist. Die Form der Oberfläche kann hierbei an das zu kontaktierende Element angepasst sein. Auch kann die Oberfläche im Bereich des Auflagebereichs anderweitig strukturiert, etwa genoppt, geriffelt, gerillt, etc. sein. Insbesondere können Erhebungen zur Fixierung der Folie in der aufgelegten Position dienen. Eine im Wesentlichen glatte Oberfläche ist auch möglich. Diese begünstigt eine Nachjustierung der Position der Folie im aufgelegten Zustand.

Der Auflagebereich kann bis an zumindest eine begrenzende Kante der jeweiligen Oberfläche des Metallteils reichen und auf diese Weise vom Metallteil selbst begrenzt sein. Der Auflagebereich kann aber auch vollständig innerhalb der jeweiligen Oberfläche des Metallteils liegen und zu allen Richtungen einen Abstand zu den die Oberfläche begrenzenden Kanten aufweisen.

Die Folie kann den Auflagebereich durch ihre Größe definieren. So kann die Folie genau im Auflagebereich auf dem Metallteil aufliegen und die von ihr eingenommene Fläche genau mit dem Auflagebereich übereinstimmen. Es ist auch möglich, dass die Folie größer ist als die Auflagefläche und nur ein Teil der Folie an dem Metallteil anliegt.

Bei dem Auflegen der Folie auf dem Metallteil kann diese in einem Auflagebereich abgelegt werden. Das Auflegen kann also die Position der Folie auf dem Metallteil bestimmen. Das Auflegen kann ohne eine besondere Bindung zwischen Folie und Metallteil in diesem Schritt erfolgen. Die Folie kann also einfach lose aufliegen. Auch kann die Folie aufgepresst werden etwa mittels einer Walze, eines auf das Metallteil zu bewegten Trägers, einem Stempel, etc. Bei einer pressenden Aufbringung der Folie kann diese schon zumindest teilweise an dem Metallteil anhaften, insbesondere kann eine kraft- und/oder stoffschlüssige Verbindung an einer Grenzfläche gebildet werden, sodass ihre Position zumindest zeitweise zu einem gewissen Grad fixiert ist. Es kann in diesem Schritt bevorzugt eine kraftschlüssige Verbindung erreicht werden.

Falls eine Oberflächenstrukturierung im Bereich des Auflagebereichs auf dem Metallteil angeordnet ist, kann diese Strukturierung zur weiteren Fixierung beitragen, egal ob die Folie nur aufgelegt oder anderweitig, bspw. mit Druck aufgebracht wurde. So können beispielsweise Positionierungsnoppen an dem Metallteil im Auflagebereich vorgesehen sein. Insbesondere an den Seitenbereichen der Auflagefläche und/ oder der Folie, insbesondere im Falle einer rechteckigen Folie im Bereich der Ecken der Folie. Auch kann durch eine reliefartige Oberflächenstruktur im Auflagebereich ein optimierter Formschluss zwischen Folie und Oberfläche, insbesondere beim Aufpressen, erzielt werden.

Vorzugsweise ist die Folie vor dem Auflegen auf das Metallteil bereits auf eine Form zugeschnitten. Diese Form kann der Form der Auflagefläche entsprechen, die Folie kann aber auch größer als die Auflagefläche sein, auch kann sie kleiner sein. Eine Folie, die größer als die Auflagefläche ist, kann Positionierungsfehler ausgleichen. Des Weiteren kann die Folie auch anhand des Laserstrahls am Rand der erzeugten Beschichtung so bearbeitet werden, dass die Beschichtung von frei liegender, nicht bearbeiteter Folie per Laser getrennt wird. Kleine Verschiebungen der Folie relativ zur korrekten Position führen nicht dazu, dass Teile der Auflagefläche nicht von der Folie abgedeckt sind. Auch ist es möglich, die Folie gar nicht zu schneiden, sondern einen kleinen Bereich eines im Verhältnis dazu großen Folienstücks auf das Metallteil aufzulegen und den Rest der Folie nicht in Kontakt mit dem Metallteil kommen zu lassen. Andererseits kann es gewünscht sein, dass die Folie nicht über den Auflagebereich hinaus ragt. In diesem Falle ist eine Folie mit kleinerer Fläche als der Auflagebereich vorteilhaft, da auch Positionierungsfehler der Folie diese nicht zwangsweise über den Auflagebereich hinausragen lassen.

Die Folie kann vor dem Auflegen mittels eines Vakuum-Greifers, einer Trägerwalze, per Hand, mittels eines mechanischen Greifwerkzeugs oder anderer Haltemöglichkeiten gehalten werden. Weiterhin kann die Folie anhand eines weiteren Schweißverfahrens, wie z.B. Widerstandschweißen angeheftet werden. Es kann vorteilhaft sein, die Folie mittels der jeweiligen Haltemöglichkeit direkt auf das Metallteil aufzulegen. So kann eine reproduzierbare Positionierung relativ zum Metallteil erreicht werden. Beispielsweise können bereits zugeschnittene Folien auf einer Walze vorgehalten werden und auf das Metallteil abgewalzt werden.

Im Unterschied zu einem herkömmlichen Laserauftragsschweißen wird gegenständlich das aufzutragende Material in Form der Folie bereitgestellt. Dabei erfolgt der Schichtauftrag mit der Folie lokal selektiv. An dem Metallteil kann punktgenau, z.B. an einer Anschraubfläche eine Beschichtung erfolgen, wohingegen der Rest des Metallteils unbeschichtet bleiben kann. Der Übergang zwischen der Beschichtung und dem unbeschichteten Bereich kann örtlich scharf sein, ohne dass es einer Übergangszone bedarf.

Der Prozess des Auflegens kann in einer dafür eingestellten Umgebung stattfinden. So ist es möglich, dass die Temperatur der Umgebung eingestellt ist. Abhängig von dem Material der Folie, kann diese durch eine Temperatur, insbesondere eine im Vergleich zur üblicherweise zu erwartenden Umgebungstemperatur erhöhte Temperatur, eine im Vergleich zur Konsistenz bei Umgebungstemperatur weichere Konsistenz aufweisen (gemessen nach einem der oben genannten Messverfahren). Insbesondere kann die Temperatur der Folie nahe ihrem Schmelzpunkt eingestellt sein. Eine weichere Konsistenz kann eine Anpassung der Folie an die Oberfläche des Metallteils begünstigen und insbesondere einen großflächigeren Kontakt zwischen Folie und Metallteil direkt nach dem Auflegen erwirken. Auch ist es möglich, dass die Temperatur im Vergleich zur Umgebungstemperatur verringert ist und so für eine härtere Folie sorgt. Dies kann ein Zerreißen der Folie vermeiden.

Es kann nach dem Auflegen der ersten Folie eine zweite Folie oder auch mehr Folien (unmittelbar oder nach Ablauf einer Zeit) auf das Metallteil aufgelegt werden. Diese können einander überlappen, insbesondere vollständig überlappen, aber auch in vollständig voneinander getrennten Auflagebereichen positioniert sein.

In einem weiteren Schritt des gegenständlichen Verfahrens wird die auf dem Metallteil aufgelegte Folie zumindest in Teilen des Auflagebereichs mit einem Laser bestrahlt. Mittels des Lasers kann die Folie lokal erhitzt und ggf. geschmolzen, insbesondere umgeschmolzen werden. Auch das unter der Folie liegende Material des Metallteils kann in diesem Schritt erhitzt und ggf. lokal geschmolzen, insbesondere umgeschmolzen werden. Auf diese Weise kann eine stoffschlüssige Verbindung zwischen Folie und Metallteil erreicht werden. Die Folie kann durch den Laser auf das Metallteil aufgeschweißt oder aufgelötet werden.

Der Laser kann ein gepulster Laser sein, insbesondere ein Ultrakurzpulslaser, oder ein Dauerstrichlaser mit einem kontinuierlichen Laserstahl. Solche Laser sind bekannt und werden bereits eingesetzt zur oben beschriebenen Freilegung von beschichteten Flächen, beispielswese nach einer Beschichtung eines Metallteils. Durch die vorgeschlagene Verwendung eines ggf. bereits vorhandenen Lasers fügt sich das gegenständliche Verfahren mühelos in bereits existierende Produktionsketten ein. Der Laser kann insbesondere ein Nd:YAG-, ein COz-, ein Dioden- oder ein Scheibenlaser sein. Andere Lasertypen sind möglich.

Durch den Laser ist eine räumlich genau begrenzte Verbindung zwischen Folie und Metallteil möglich. Durch Bewegung des Lasers über zumindest einen Teil der Auflagefläche wird erfindungsgemäß eine stoffschlüssige Verbindung über den gewünschten Teil der Auflagefläche erreicht. Die Fläche, innerhalb derer die Folie auf dem Metallteil aufgeschweißt ist, wird im Folgenden Schweißfläche genannt. Diese kann Teile der Auflagefläche umfassen. Die Schweißfläche kann insbesondere im Wesentlichen mit der Auflagefläche übereinstimmen. Die stoffschlüssige Verbindung zwischen Folie und Metallteil kann in Teilen der Schweißfläche erreicht werden. Es kann aber auch eine im Wesentlichen lückenlose stoffschlüssige Verbindung zwischen Folie und Metallteil über die gesamte Schweißfläche erreicht werden.

Da der Laser nicht die gesamte Schweißfläche auf einmal erhitzen kann, wird vorgeschlagen, den Laser entlang eines Schweißmusters über die Schweißfläche zu bewegen. Dieses Schweißmuster kann entlang einer die Schweißfläche zumindest teilweise ausfüllenden Linie in einer kontinuierlichen Bewegung abgefahren werden. Auch ist es möglich, ein Raster schrittweise mit dem Laser abzufahren und die Folie punktweise bei jedem Schritt an einem anderen Rasterpunkt des Rasters auf das Metallteil zu schweißen.

Es ist vorteilhaft, wenn zunächst Bereiche in der Mitte der Schweißfläche mittels Laser verschweißt werden und erst danach immer weiter außen liegende Bereiche.

Auf diese Art und Weise wird vermieden, dass die Folie sich einseitig zusammenzieht oder expandiert. Auch werden Lufteinschlüsse zwischen Folie und Metallteil vermieden. Auch kann zunächst die Kontur der Schweißfläche zumindest punktweise verschweißt werden. Erst dann kann sich der Laser von außen immer weiter nach innen bewegen. So wird ein Schrumpfen der Folie weitestgehend vermieden. Es ist weiterhin vorteilhaft, wenn die Bereiche derart auf der Schweißfläche angeordnet sind, dass die vom Laserstrahl (Laserspot) aufgeheizten Bereiche einander teilweise überlappen. So wird vermieden, dass nicht verschweißte Bereiche innerhalb der Schweißfläche verbleiben und es kann eine im Wesentlichen ganzflächige stoffschlüssige Verbindung zwischen Folie und Metallteil erreicht werden.

Durch die Einwirkung des Lasers kann sich die Folie beim Verschweißen zusammenziehen oder ausdehnen. Um dem entgegenzuwirken, kann die Reihenfolge der Rasterpositionen für das Schweißen wie oben genannt angepasst werden. So können äußere Rasterpositionen zuerst verschweißt werden. Auch kann die Folie aus diesem Grund größer oder kleiner als die Schweißfläche und/ oder als die Auflagefläche dimensioniert werden. So bleibt die Schweißfläche abgedeckt, auch wenn die Folie etwas kontrahiert bzw. die Folie dehnt sich nicht weit über die Grenzen des Auflagebereichs aus, wenn sie expandiert. Die Folie kann auch zuerst in einem groben Raster aus Schweißpunkten fixiert werden und dann immer feiner verschweißt werden, sodass Verformungen der Folie nur sehr lokal bleiben.

Falls die Fläche der Schweißfläche kleiner als die Größe der aufgelegten Folie ist, können überschüssige Folienteile durch den Laser entfernt werden. Hierzu kann der Rand der Folie mit dem Laserstrahl abgefahren werden und die Folie somit abgeschnitten werden. Es kann für das Schneiden eine höhere Laserleistung verwendet werden, auch kann die gleiche Laserleistung eingesetzt werden, wie für das Schweißen. Zur Durchtrennung der Folie mittels Laser ist es vorteilhaft, wenn die Folie im Bereich des Schnitts nicht im direkten Kontakt mit dem Metallteil steht. So kann die Folie lokal getrennt werden, insbesondere verdampfen.

Um einen nahtlosen Übergang zwischen Folie und unbeschichteter Oberfläche des Metallteils zu erreichen, kann es vorteilhaft sein, die Folie nach Ausschneiden zunächst aufzuwalzen oder anderweitig dem Metallteil anzunähern. Danach kann der aufgedrückte Randbereich der Schweißfläche erneut mit dem Laser abgefahren werden und die möglicherweise verbleibenden, noch nicht verschweißten Folienteile auf das Metallteil umschmelzen. Auch können diese Schritte (Aufdrücken) entfallen und einfach alle verbleibenden überstehenden Folienteile vom Laser verdampft werden.

Es ist erkannt worden, dass die Folie unter Lasereinwirkung in Abhängigkeit vom Kontakt zum Metallteil entweder auf dieses aufgeschweißt werden kann oder verdampft. Wenn ein Kontakt zwischen den beiden besteht, kommt es zur Verschweißung, andernfalls wird die Folie aufgetrennt. Dies kann genutzt werden, um eine kombinierte Ausschneidung und vollflächiger Verschweißung der Folie zu erreichen. Die Folie kann das Metallteil hierfür nur im Bereich der gewünschten Schweißfläche kontaktieren. Sie kann über diese Schweißfläche hinausragen, ohne aber das Metallteil zu kontaktieren. Indem der Laser nun die Folie inklusive ihrer Randbereiche abfährt, wird die Folie in den mit dem Metallteil kontaktierenden Bereichen aufgeschweißt. In den Bereichen, in denen ein Abstand zwischen Folie und Metallteil besteht, verdampft sie. Die Schweißfläche wird automatisch in einem Schritt verschweißt und sauber ausgeschnitten. Auch kann direkt nach dem Auflegen, insbesondere während das Haltewerkzeug die Folie noch in Position hält, der Schnitt um die Kontur der Folie durch den Laser erfolgen. Danach kann die Folie vom Laser umgeschmolzen werden.

Das beschriebene Vorgehen aus kombinierter Verschweißung und Ausschneidung ist insbesondere hilfreich, wenn die Folie größer als die Schweißfläche ist oder noch gar nicht in Form geschnitten ist. Die Folie kann beispielsweise von einem großen Reservoir, etwa einem Endlosband, abgerollt werden und im Auflagebereich auf das Metallteil aufgepresst werden, insbesondere ohne vorher ausgeschnitten zu werden. Auch kann die zugeschnittene Folie nur etwas größer als die Schweißfläche ausfallen, beispielsweise 10%, 20%, 30%, 40% oder 50%, um Positionierungsfehler und/ oder eventuelle Kontraktion der Folie unter Lasereinwirkung zu kompensieren. Auch kann die Folie kleiner, etwa 10%, 20%, 30% kleiner als die Schweißfläche dimensioniert werden, um eventuell auftretende Expansion zu kompensieren.

Der Laser wird erfindungsgemäß zunächst die Folie in einem Auflagebereich, in dem die Folie mit dem Metallteil in Kontakt ist, verschweißen. Danach kann der Laser die Kontur der Folie, wo diese nicht mehr unmittelbar auf dem Metallteil aufliegt, aufschneiden. Eventuell verbleibender Überstand der Folie kann beispielsweise verdampft werden. Auch können die Schritte 1-(Kontur ausschneiden) und 2-(Folie in Schweißfläche umschmelzen) getauscht werden. Es ergibt sich eine selektive Beschichtung in einem kombinierten Schritt aus Schweißen und Schneiden. Ein Zuschneiden der Folie vor Auflegen und/ oder Verschweißen entfällt. Auch entfallen Positionierungsschwierigkeiten der Folie relativ zum Metallteil, da der Schnitt die Folienfläche bestimmt.

Es kann vorteilhaft sein, die Folie unter einer bestimmten Zusammensetzung des umgebenden Gases auf das Metallteil aufzubringen und/ oder mittels Laser zu bearbeiten. So kann etwa ein Unterdruck in der Umgebung von Metallteil und Folie herrschen, der ein nahezu gasfreies Vakuum erwirkt. Somit werden Lufteinschlüsse größtenteils vermieden. Auch ist es möglich, die Folie unter einer Schutzgasatmosphäre, wie beispielsweise Stickstoff, Argon, Argon-Helium, etc. aufzubringen. So können chemische Änderungen der Folie, insbesondere Oxidation, vermieden werden. Das Schutzgas kann zeitweise Teile des Aufbaus, insbesondere Teile der Folie umgeben oder aber die Folie und/oder das Metallteil können über den gesamten Vorgang des Verfahrens hinweg in eine Schutzgasatmosphäre eingehüllt sein. Insbesondere kann während des Laserschweißens eine Schutzgasatmosphäre hilfreich sein, um eine Veränderung der Materialeigenschaften, insbesondere eine Oxidation zu vermeiden.

Häufig ist das Ziel der lokalen Beschichtung eine Vorbereitung des Metallteils auf eine Verbindung. Dies können Kraftverbindungen sein und hierbei sind insbesondere Schraubverbindungen üblich. Für Kraftverbindungen allgemein kann die beschichtete Fläche im Bereich eines Anschlussbereichs der Verbindung angeordnet sein, in welchem das Metallteil und das zu verbindende Teil aneinander anliegen. Insbesondere kann der Anschlussbereich komplett innerhalb der Schweißfläche liegen. In diesem Falle kommt das zu verbindende Element nur in Kontakt mit der Folienbeschichtung, nicht mit dem unbeschichteten Material des Metallteils.

Das erfindungsgemäße Verfahren umfasst die Beschichtung des Metallteils um ein Loch herum. Dies ist möglich, indem die Folie wie oben beschrieben im Auflagebereich auf das Metallteil gelegt wird, welcher nun eine oder mehrere Ausnehmungen, nämlich Löcher, umfasst. Im Schweiß-Schritt wird der Laser über die Schweißfläche bewegt und schmilzt diese um. Die Schweißfläche schließt in diesem Falle nicht die Ausnehmungen ein (die Auflagefläche schließt die Ausnehmungen aber schon ein). Nach Beendigung des Schweißvorgangs werden die Ausnehmungen mittels des Lasers freigelegt werden. Dies geschieht durch Abfahren der Kanten mit dem Laser. Die Folie verdampft in diesen Bereichen und kann so sauber im Bereich der Ausnehmungen entfernt werden. Die Folie muss hierbei selbstverständlich nur im Bereich des Randes der Ausnehmungen durch den Laser zerschnitten werden und kann dann entfernt werden. Auch ist es möglich, dass der Laser zunächst die Randbereiche der Ausnehmungen außerhalb der Ausnehmungen, also in Bereichen, in denen sich unter der Folie noch das Metallteil befindet, abfährt und so eine Verschweißung im Randbereich erwirkt. Erst dann kann wird der Rest der Schweißfläche verbunden werden. Danach können die Aussparungen ausgeschnitten werden. Eine solche Reihenfolge der vom Laser umgeformten Bereiche kann in ein oben beschriebenes Schweißmuster integriert werden.

Für Kraftverbindungen, aber auch für andere Verbindungen, können häufig eine oder mehrere Ausnehmung im Metallteil wie oben genannt vorgesehen sein. Insbesondere sind Löcher denkbar.

Für das Verfahren ist die Intensität des Lasers, d.h. dessen Leistung, von entscheidender Bedeutung. Bei einer zu hohen Intensität wird die Folie beschädigt oder verzieht sich. Bei einer zu geringen Intensität kommt keine zuverlässige stoffschlüssige Verbindung zustande. Die Leistung des Lasers muss sowohl an die Schichtdicht, als auch an das Folien-Material und das Metallteil-Material, die Temperatur des Vorgangs, etc. angepasst werden.

Falls zwei oder mehr Folien auf dem Metallteil verschweißt werden sollen, können diese beim Schritt des Auflegens zunächst auf dem Metallteil positioniert werden. Danach können die Folien jeweils, oder, falls sie sich überlappen, gemeinsam in einem Schritt in diesem Überlappungsbereich, vom Laser verschweißt werden wie oben beschrieben. Auch ist es möglich eine erste oder mehrere erste Folien zunächst aufzulegen und zu verschweißen. Danach kann in einem zweiten oder auch weiteren Durchgängen eine oder mehrere weiterer Folien auf dem bereits beschichteten Metallteil aufgelegt und danach verschweißt werden. Der Vorgang kann mit beliebig vielen weiteren Folienschichten wiederholt werden. Eine derartige zwei- oder mehrschrittige Verschweißung kann vorteilhaft sein, um eine mehrschichtige Beschichtung zu erreichen. So kann beispielsweise eine Kontaktierung zwischen zwei Metallwerkstoffen besonders stark voneinander abweichender Redox-Potentiale durch das Einfügen einer kompensierenden Zwischenschicht ermöglicht werden. Die Auflagebereiche und/oder Schweißflächen verschiedener, nacheinander auf dem Metallteil aufgeschweißter Folien können räumlich vollkommen getrennt voneinander sein, also keine Überlappung aufweisen. Auch ist es möglich, dass diese überlappen. So kann insbesondere eine später aufgebrachte Folie die vorher aufgebrachte Folie komplett einschließen. Auch die zuerst aufgebrachte Folie kann den von der später aufgebrachten Schicht eingenommenen Bereich komplett einschließen.

Ein weiterer Aspekt betrifft ein Metallteil hergestellt nach dem beschriebenen Verfahren. Ein solches Metallteil ist aus einem ersten Metallwerkstoff geformt und ist an einem Bereich seiner Oberfläche mit einem zweiten Metallwerkstoff beschichtet. Der Rest der Oberfläche des Metallteils, abseits des beschichteten Bereichs, kann nicht beschichtet sein und weist in den unbeschichteten Bereichen keine Rückstände und/ oder Spuren von einer Entfernung einer Metallbeschichtung auf.

Das nach dem gegenständlichen Verfahren hergestellte Metallteil kann ein Anschlussteil sein. Ein solches Anschlussteil kann zum einen einen Bereich zum Herstellen einer Schweißverbindung aufweisen. Dieser Bereich ist bevorzugt nicht beschichtet und ist auch nicht von einer Beschichtung befreit worden. Er wurde also im Herstellungsprozess des Anschlussteils nicht beschichtet und wieder von seiner Beschichtung befreit. Zudem ist an dem Anschlussteil ein Anschlussterminal für eine Kraftverbindung vorgesehen. Diese kann insbesondere eine Schraubverbindung sein, aber auch eine Klemm-, Press-, Nietverbindung oder andere. So ist an dem Anschlussteil im Bereich, in dem die Schraubverbindung zustande kommen soll, ein Loch mit oder ohne Gewinde in dem Anschlussteil vorgesehen. Im Bereich des Lochs ist die Oberfläche des Anschlussteils nach dem gegenständlichen Verfahren beschichtet. Die Beschichtung kann beidseitig auf den beiden Seiten des Anschlussteils, welche von dem Loch verbunden werden, aufgebracht sein. Es ist auch möglich, dass die Beschichtung nur auf einer der beiden Seiten angebracht ist. Die Größe der Beschichtung auf der jeweiligen Seite kann sich nach der Größe des zu kontaktierenden Elements richten. So kann das zu kontaktierende Element mit seiner gesamten Kontaktfläche ausschließlich auf dem beschichteten Bereich (Schweißfläche) angeordnet sein. Auch ist es möglich, dass nur Teile der Kontaktfläche auf dem Metallteil beschichtet sind.

Nachfolgend wird der Gegenstand anhand einer Ausführungsbeispiele zeigenden Zeichnung näher erläutert. In der Zeichnung zeigen:
- Fig. 1: ein Ausführungsbeispiel des gegenständlichen Verfahrens;
- Fig. 2: ein Ausführungsbeispiel einer strukturierten Auflagefläche;
- Fig. 3: Ausführungsbeispiele verschiedener kontinuierlicher Schweißmuster;
- Fig. 4: Ausführungsbeispiele verschiedener gerasterter Schweißmuster;
- Fig. 5: Ausführungsbeispiele verschiedener gerasterter Schweißmuster mit Randfixierung;
- Fig. 6: ein Ausführungsbeispiel einer kombinierten Umschmelzung und Ausschneidung;
- Fig. 7: ein Ausführungsbeispiel eines Anschlussteils hergestellt nach dem gegenständlichen Verfahren.

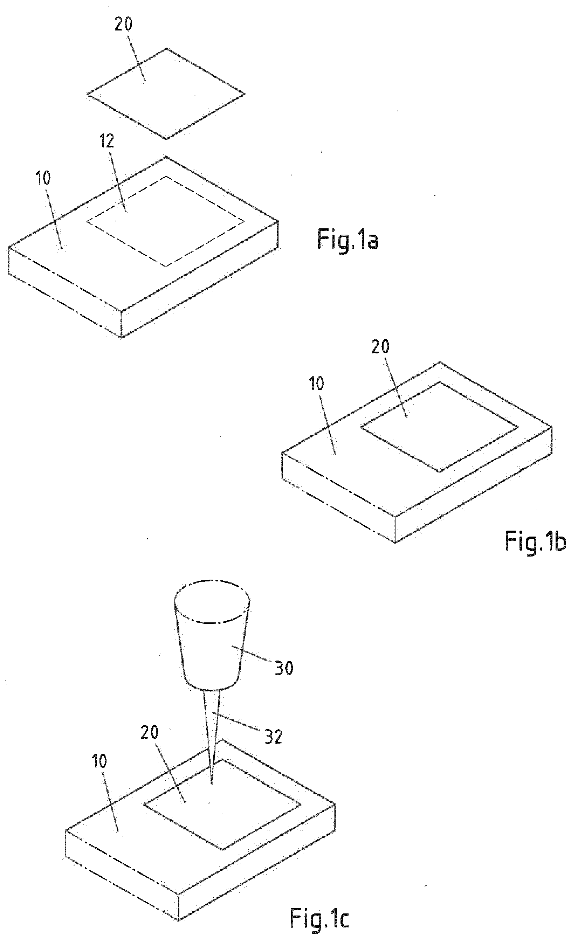

Die Figs. 1a-c zeigen das gegenständliche Beschichtungsverfahren in seinen Grundzügen. Zunächst werden ein Metallteil 10 und eine Metallfolie 20 bereitgestellt, siehe Fig. 1a. Es lässt sich bereits ein Auflagebereich 12 auf dem Metallteil 20 definieren, auf den die Folie positioniert werden wird.

In Fig. 1b wurde die Folie 20 auf dem Metallteil 10 im Bereich des Auflagebereichs 12 aufgelegt. Die Folie 20 kann, wie oben beschrieben, lose aufgelegt werden oder auch schon mit einer gewissen Kraft auf dem Metallteil aufgepresst werden. Foliengröße und Auflagebereich 12 müssen nicht übereinstimmen, so kann die Folie 20 sowohl größer als auch kleiner als der Auflagebereich 12 sein.

In Fig. 1c ist die Einstrahlung eines Laserstrahls 32 aus einem Laser 30 auf die Folie 20 gezeigt. Der Laser 30 kann die Folie 20 umschmelzen und so eine stoffschlüssige Verbindung zwischen Folie 20 und Metallteil 10 im Bereich der Laser-Einwirkung erreichen. Es wird eine stoffschlüssige Verbindung in zumindest Teilen des Auflagebereichs 12 in einer Schweißfläche erreicht. Wenn in diesem Dokument die Rede von einem Laser ist, so ist kann damit sowohl der Laserstrahl oder auch die Apparatur des Lasers gemeint sein.

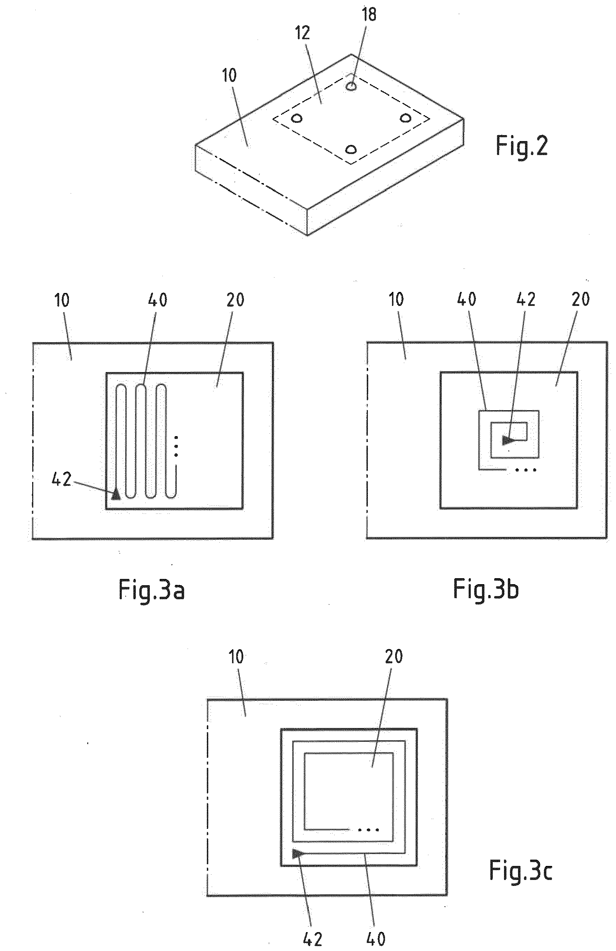

Zur verbesserten Fixierung der Folie 20 auf dem Metallteil 10 nach Auflegen kann die Oberfläche des Metallteils 10 im Bereich des Auflagebereichs 12 strukturiert sein. Insbesondere können Erhebungen 18 im Auflagebereich 12 vorgesehen sein. Insbesondere können Positionierungsnoppen 18 an den Randbereichen des Auflagebereichs 12 vorgesehen sein wie in Fig. 2 gezeigt. Im Falle einer rechteckigen Folie 20 können die Erhebungen 18 im Bereich der Ecken der Folie 20 und/ oder des Auflagebereichs 12 angeordnet sein.

Da der Laser 30 die Folie 20 nur lokal erwärmen und umschmelzen kann, muss der Laser 30 sich für die flächige Verbindung zwischen Folie 20 und Metallteil 10 über die Schweißfläche bewegen. Dies geschieht in einem Schweißmuster 40. Fig. 3 zeigt einige beispielhafte und vorteilhafte Schweißmuster. Der Laser 30 kann hierbei in einer kontinuierlichen Bewegung über die Folie 20 bewegt werden. Fig. 3a zeigt ein mäanderförmiges Schweißmuster 40, dass sich von einem Startpunkt 42 aus in parallelen Bahnen über die Folie 20 erstreckt. Dieses Muster hat den Vorteil, dass viele Folienformen gleichmäßig ohne Abschaltung und/ oder Neupositionierung des Lasers in einem Schritt abgefahren werden können.

Alternativ kann der Laser 30 sich wie in Fig. 3b gezeigt von einer mittigen Position 42 des Auflagebereichs 12 bzw. Schweißbereichs in im Wesentlichen zum Anfangspunkt 42 konzentrischen Bahnen nach außen bewegen. Dies hat den Vorteil, dass sich die Folie 20 nicht zu einer Seite der'Auflagefläche 12 hin verschiebt. Außerdem ist die Gefahr von Lufteinschlüssen gering.

Alternativ kann der Laser 30 wie in Fig. 3c gezeigt vom Rand der aufgelegten Folie 20 an einem Startpunkt 42 starten und sich von dort Richtung Mitte der Schweißfläche vorarbeiten. Dies kann den Vorteil haben, dass der Randbereich der Folie 20 bereits fest mit dem Metallteil 10 verbunden ist und die Folie 20 so nicht mehr beweglich ist, insbesondere kontrahieren oder expandieren kann. Eine Abdeckung des Schweißbereichs von der Folie 20 ist so gesichert.

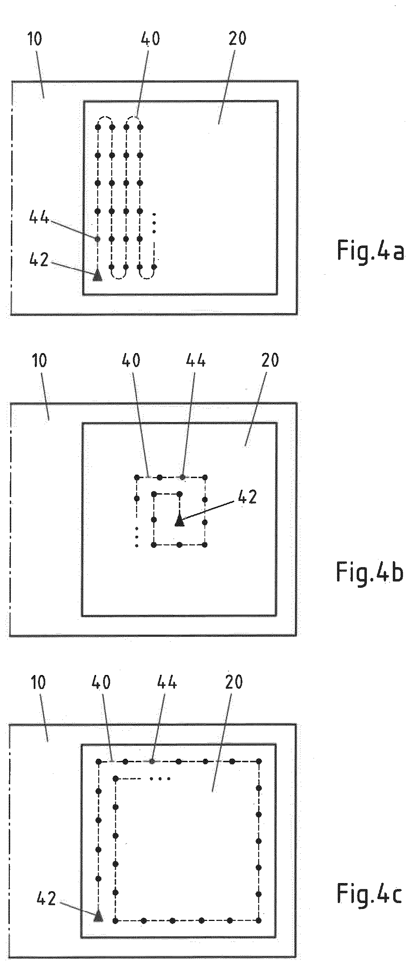

Anstatt oder in Kombination mit einer kontinuierlichen Bewegung des Lasers 30 entlang eines Schweißmusters 40 ist es auch möglich, den Laser 30 in jeweils einem Punkt 44 in einem Raster 40 auf die Folie 20 einwirken zu lassen. Hierbei bewegt sich der Laser 30 nicht während der Lichtabgabe, sondern zwischen einzelnen Einstrahlungsereignissen. In jedem Punkt wir eine Umschmelzung der Folie 20 erwirkt. Der Laser fährt dennoch, wenn auch punktweise, ein Muster 40 ab. Fig. 4 a-c zeigen die Muster 40 aus Fig. 3 a-c mit einer punkweisen Lasereinwirkung.

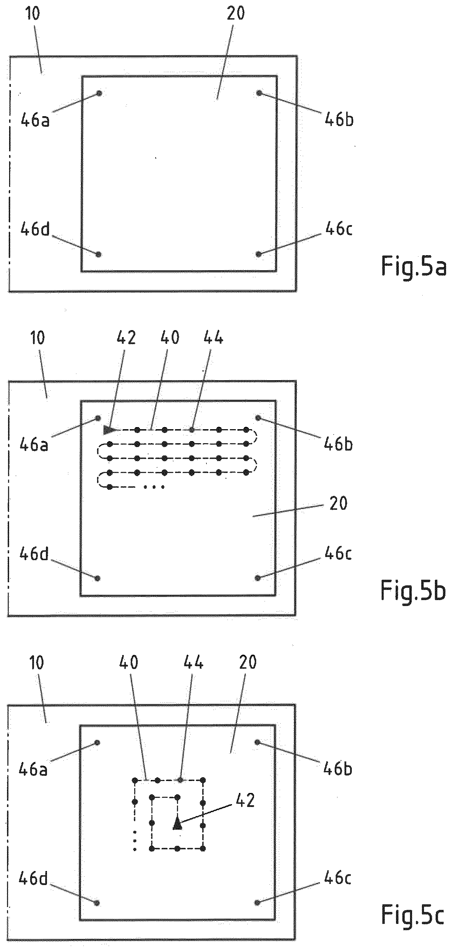

Um eine Verschiebung, Kontraktion, Expansion oder sonst eine Veränderung der Position oder Form der Folie 20 durch die Einwirkung des Laserstrahls 32 zu verringern, kann die Folie 20 vor der vollflächigen Umschmelzung an einzelnen Positionierungspunkten 46 umgeschweißt werden. Danach kann die vollflächige Verbindung zwischen Folie 20 und Metallteil 10 mittels Laser 30 vollzogen werden. Fig. 5a zeigt beispielhaft vier Positionierungspunkte 46 a-d an den Ecken eines rechteckigen Auflagebereichs 12. je nach Form der Schweißfläche können mehr oder weniger und anders positionierte Positionspunkte 46 gesetzt werden. Auch sind Positionspunkte 46 in mittigen Stellen der Schweißfläche denkbar. Auch ist ein nicht gezeigtes Vorgehen möglich, bei dem zunächst ein grobes Raster von Schweißpunkten umgeschmolzen wird und dann immer feinere Rasterungen folgen. Auch ist ein erstes im Wesentlichen gleichmäßig verteiltes initiales Raster möglich, das dann durch ein vollflächiges Abfahren gefolgt wird, beispielsweise nach einem der Muster in Fig. 3a-c.

In Fig. 5b ist eine anschließende vollflächige Umschmelzung der Folie 20 auf dem Metallteil 10 gezeigt, nach Aufbringung der Positionierungspunkte 46. Diese kann wie in Fig. 5b mäanderförmig verlaufen, aber auch wie in Fig. 3c und 4c im Wesentlichen konzentrisch von außen nach innen verlaufend, wie in Fig. 5c von innen nach außen verlaufend oder andersartig verlaufen. Das Muster 40 der Fig. 5c hat den Vorteil, dass durch die sich nach außen ausbreitende Umschmelzung Lufteinschlüsse vermieden werden und gleichzeitig eine Verformung der Folie durch die außenliegenden Positionierungspunkte 46 vermieden wird.

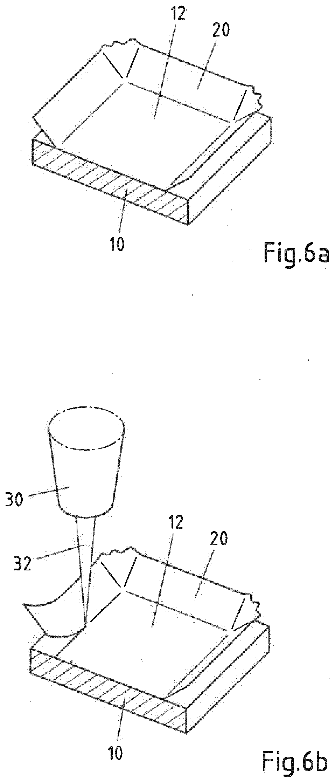

Fig. 6 zeigt das kombinierte Umschmelzen und Ausschneiden der Folie 20 durch den Laser 30. Dort, wo die Folie 20 im Auflagebereich 12 Kontakt zum Metallteil 10 hat, wirkt der Laser 30 umformend und verschweißt Folie 20 und Metallteil 10. Dort aber, wo die Folie 20 nicht direkt auf dem Metallteil 10 aufliegt, trennt der Laser 30 die Folie 20 auf. So kann durch eine entsprechend positionierte Folie 20 diese sowohl im mittigen Auflagebereich 12 oder in der davon eingeschlossenen Schweißfläche umgeschmolzen und stoffschlüssig mit dem Metallteil 10 verbunden werden. In den Randbereichen des Auflagebereichs 12, in denen die Folie 20 nicht aufliegt, wirkt der Laser 30 hingegen schneidend. Die Folie 20 wird somit in einem Durchgang durch den Laser 30 sowohl umgeschmolzen als auch ausgeschnitten. Die Reihenfolge zwischen Kontur schneiden und Folie in der Schweißfläche umschmelzen können umgekehrt werden.

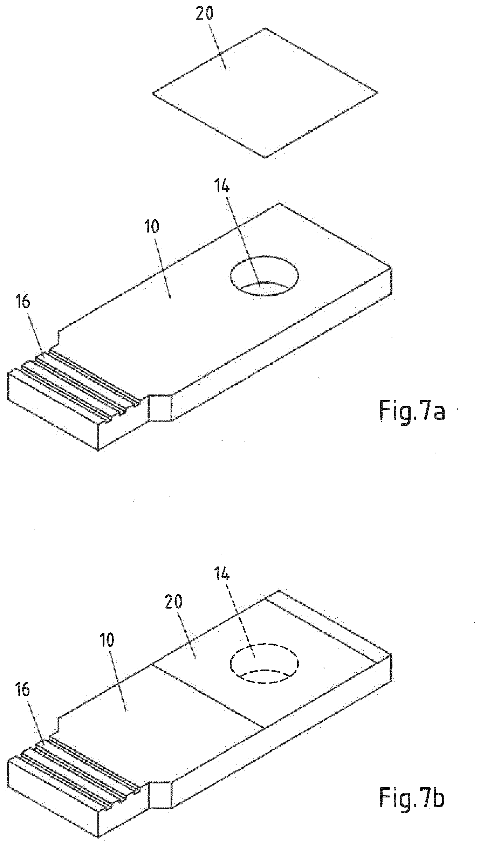

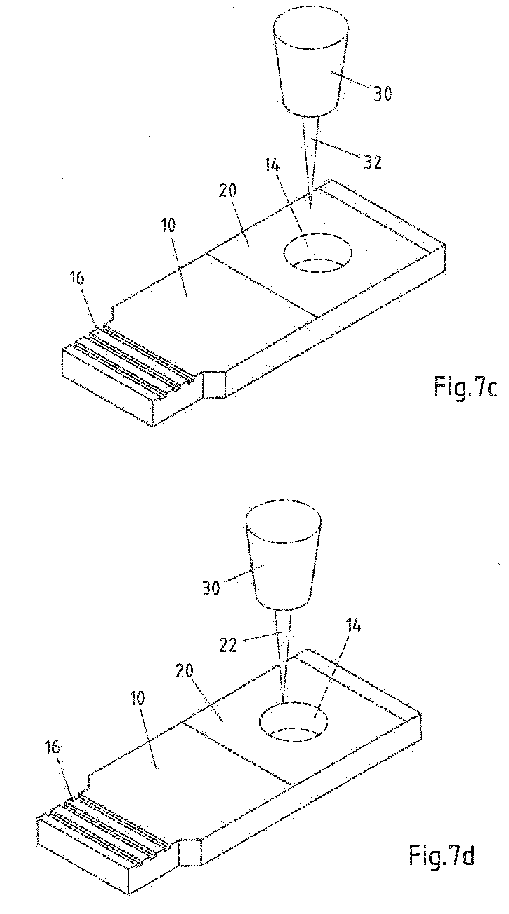

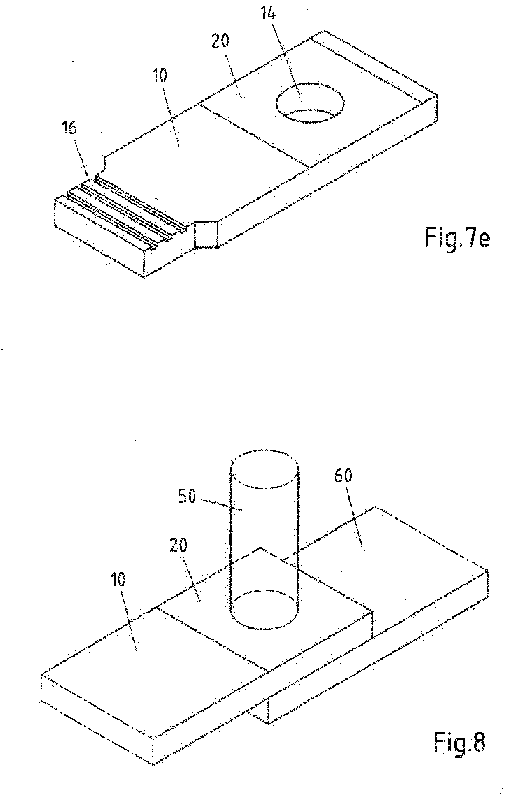

Fig. 7 zeigt ein Anschlussteil hergestellt nach dem gegenständlichen Verfahren. Dieses ist aus einem Metallwerkstoff geformt und umfasst zum einen ein Schweißterminal 16. Dieses kann eine für den Schweißvorgang vorbereitete Fläche aufweisen, die insbesondere glatt oder, wie in Fig. 7a gezeigt, aufgeraut, insbesondere mit Rillen versehen sein kann. Des Weiteren weist das Anschlussteil ein Loch 14 auf. Dieses kann beispielsweise für eine Schraubverbindung vorgesehen sein, auch eine Nietverbindung oder dergleichen ist möglich. Der Bereich mit Loch 14 ist also für eine Kraftverbindung gedacht.

Gemäß dem erfindungsgemäßen Verfahren wird nun eine Folie 20 auf den gelochten Bereich der späteren Kraftverbindung aufgelegt, siehe Fig. 7a,b. Die Folie 20 wird nun wie in Fig. 7c gezeigt mittels eines Lasers 30 im Auflagebereich und ggf. der Schweißfläche stoffschlüssig verbunden. Das Loch ist von dem Schweißmuster 40 (nicht gezeigt) ausgenommen. In einem weiteren Schritt (Fig. 7d) wird das Loch nun von demselben, oder auch einem anderen Laser 30 freigelegt. Hierfür wird die Folie von dem Laser im Bereich der Kontur des Lochs verdampft, Fig. 7e zeigt das fertige Anschlussteil. Dieses ist einerseits für eine Schweißverbindung vorbereitet und hat eine vollends reine Oberfläche. Zum anderen ist es durch die Folienbeschichtung für eine Kraftverbindung vorbereitet. Beispielsweise kann die beschichtete Fläche duktiler sein als der Rest der Oberfläche des Metallteils.

Eine Beschichtung mittels Folie 20 kann auch für andere Zwecke als einen besseren Kontakt eingesetzt werden. So ist eine bereichsweise weichere Oberfläche (geringere Härte nach einem der oben genannten Messverfahren) als die sonstigen des Metallteils beispielsweise hilfreich für ein Ultraschallschweißen. Wenn die Sonotrode 50 eines Ultraschallgeräts auf einer zu harten Metallfläche aufsetzt, kann durch Aufeinandertreffen zweier harter Materialien eine hohe Abrasion entstehen und die Schweißzeiten müssen reduziert werden. Hier ist es hilfreich, wie in Fig. 8 gezeigt, die Kontaktfläche der Sonotrode auf einem ersten Metallteil 10 mit einer Folie 20 zu beschichten. Beim Ultraschallverschweißen mit einem zweiten Metallteil 60 setzt die Sonotrode nun in einem beschichteten Bereich des ersten Metallteils 10 an und kann für längere Zeiten auf diesem Energie einbringen, ohne eine zu starke Abrasion zu verursachen.

### BEZUGSZEICHENLISTE

- 10: Metallteil
- 12: Auflagebereich
- 14: Loch
- 18: Erhebungen
- 20: Folie
- 30: Laser
- 32: Laserstrahl
- 40: Schweißmuster
- 42: Startpunkt
- 44: Rasterpunkt
- 46: Positionierungspunkte
- 50: Sonotrode
- 60: Metallteil

## Patentansprüche

1. Verfahren zur Beschichtung von Metallteilen (10), umfassend:
- Bereitstellen eines Metallteils aus einem ersten Metallwerkstoff,
- Auflegen einer Folie (20) aus einem zweiten Metallwerkstoff auf das Metallteil in einem Auflagebereich (12),
- Bestrahlen der auf dem Metallteil aufliegenden Folie in zumindest einem Teil des Auflagebereichs mit einem Laser (30), wobei der Auflagebereich des Metallteils ein Loch (14) aufweist und zumindest teilweise ein Anschraubbereich ist,
- stoffschlüssiges Verbinden der aufliegenden Folie mit dem Metallteil im Auflagebereich, **gekennzeichnet durch**
- Verdampfen der Folie von dem Laser im Bereich der Kontur des Lochs.

2. Verfahren nach Anspruch 1,
**dadurch gekennzeichnet, dass**
- die Folie zumindest bereichsweise in einer Schweißfläche vom Laser umgeschmolzen wird, insbesondere eine stoffschlüssige Verbindung mit dem Metallteil eingeht.

3. Verfahren nach einem der vorangehenden Ansprüche,
**dadurch gekennzeichnet, dass**
- die Folie kleiner als der Auflagebereich ist oder die Folie größer als der Auflagebereich ist oder die Fläche der Folie im Wesentlichen der Fläche des Auflagebereichs entspricht.

4. Verfahren nach einem der vorangehenden Ansprüche,
**dadurch gekennzeichnet, dass**
- die Schweißfläche einen Teil des Auflagebereichs ausmacht oder die Schweißfläche im Wesentlichen den gesamten Auflagebereich ausfüllt.

5. Verfahren nach einem der vorangehenden Ansprüche,
**dadurch gekennzeichnet, dass**
- der erste Metallwerkstoff verschieden von dem zweiten Metallwerkstoff ist und/ oder dass der erste Metallwerkstoff mit dem zweiten Metallwerkstoff übereinstimmt.

6. Verfahren nach einem der vorangehenden Ansprüche,
**dadurch gekennzeichnet, dass**
- der Laser ein Ultrakurzpulslaser, insbesondere ein Nd:YAG-, CO2- oder Diodenlaser ist.

7. Verfahren nach einem der vorangehenden Ansprüche,
**dadurch gekennzeichnet, dass**
- Aussparungen des Metallteils im Auflagebereich vom Laser ausgeschnitten werden und/ oder dass die Außenkontur der Folie vom Laser ausgeschnitten wird.

8. Verfahren nach einem der vorangehenden Ansprüche,
**dadurch gekennzeichnet, dass**
- das Metallteil ein Kabelschuh ist.

9. Verfahren nach einem der vorangehenden Ansprüche,
**dadurch gekennzeichnet, dass**
- die Folie beim Auflegen nahe dem Schmelzpunkt erwärmt ist.

10. Verfahren nach einem der vorangehenden Ansprüche,
**dadurch gekennzeichnet, dass**
- im Auflagebereich eine Strukturierung aufweist, insbesondere dass im Auflagebereich eine oder mehrere Erhebungen, insbesondere Positionsnoppen angeordnet sind.

11. Verfahren nach einem der vorangehenden Ansprüche,
**dadurch gekennzeichnet, dass**
- der Auflagebereich zumindest teilweise in einem Raster aus räumlich regelmäßig verteilten Schweißpositionen vom Laser abgefahren wird und die Folie an den Schweißpositionen jeweils in einem im Wesentlichen punktförmigen Bereich bestrahlt und/ oder umgeformt wird und/ oder der Auflagebereich zumindest teilweise in einer durchgängigen Linie kontinuierlich vom Laser abgefahren wird und die Folie entlang der Linie bestrahlt und/ oder umgeformt wird.

12. Verfahren nach einem der vorangehenden Ansprüche,
**dadurch gekennzeichnet, dass**
- die Folie aus Nickel, Zinn, Silber, Gold oder Legierungen hieraus geformt ist.

13. Verfahren nach einem der vorangehenden Ansprüche,
**dadurch gekennzeichnet, dass**
- das Metallteil aus Kupfer, einer Kupferlegierung, Aluminium oder einer Aluminiumlegierung geformt ist.

14. Verfahren nach einem der vorangehenden Ansprüche,
**dadurch gekennzeichnet, dass**
- zumindest eine zweite Folie zumindest in einer zweiten Schweißfläche auf das Metallteil mittels Laser aufgebracht wird, wobei die erste Schweißfläche und die zweite Schweißfläche sich nicht überschneiden oder sich zumindest teilweise überlappen.

15. Verfahren nach einem der vorangehenden Ansprüche,
**dadurch gekennzeichnet, dass**
- ein Schutzgas zumindest einen Teil des Auflagebereichs vor und/ oder nach und/ oder während des Auflegens der Folie und/ oder der Bestrahlung durch den Laser umgibt.

## Claims

1. Method of coating metal parts (10) comprising:
- providing a metal part from a first metal material,
- applying a foil (20) made of a second metal material on the metal part in a bearing area (12),
- irradiating the foil applied on the metal part in at least a portion of the bearing area with a laser (30), wherein the bearing area of the metal part comprises a hole (14) and is at least partially a screw on area,
- materially bonding the applied foil with the metal part in the bearing area, **characterized by**
- evaporating the foil by the laser in the area of the hole.

2. Method according to claim 1,
**characterized in that**
- the foil is at least partially remelted in a welding surface by the laser, and in particular forms a material bond with the metal part.

3. Method according to any one of the preceding claims,
**characterized in that**
- the foil is smaller than the bearing area or the foil is larger than the bearing area or the area of the foil is substantially the same size as the area of the bearing area.

4. Method according to any one of the preceding claims,
**characterized in that**
- the welding surface constitutes a part of the bearing area or the welding surface substantially fills the entire bearing area.

5. Method according to any one of the preceding claims,
**characterized in that**
- the first metal material is different from the second metal material and/or the first metal material is the same as the second metal material.

6. Method according to any one of the preceding claims,
**characterized in that**
- the laser is an ultrashort pulse laser, in particular a Nd:YAG-, CO2- or diode laser.

7. Method according to any one of the preceding claims,
**characterized in that**
- recesses of the metal part in the bearing area are cut out by the laser and/or that the outer contour of the foil is cut out by the laser.

8. Method according to any one of the preceding claims,
**characterized in that**
- the metal part is a cable lug.

9. Method according to any one of the preceding claims,
**characterized in that**
- the foil is heated close to the melting point during application.

10. Method according to any one of the preceding claims,
**characterized in that**
- in the bearing area there is a arranged a structuring, in particular one or more elevations, in particular positioning nubs.

11. Method according to any one of the preceding claims,
**characterized in that**
- the bearing area is at least partially traversed by the laser in a grid of spatially regularly distributed welding positions welding positions and the foil is welded and/or reformed at the respective welding positions in an essentially punctiform area and/or the bearing area is continuously traversed by the laser in at least partially a continuous line and the foil is welded and/or formed along the line.

12. Method according to any one of the preceding claims,
**characterized in that**
- the foil is formed of nickel, tin, silver, gold or alloys thereof.

13. Method according to any one of the preceding claims,
**characterized in that**
- the metal part is formed from copper, a copper alloy, aluminium or an aluminium alloy.

14. Method according to any one of the preceding claims,
**characterized in that**
- at least one second foil is applied to the metal part at least in a second welding surface by means of a by means of a laser, wherein the first welding surface and the second welding surface do not overlap or at least partially overlap.

15. Method according to any one of the preceding claims,
**characterized in that**
- a shielding gas is applied to at least a part of the bearing area before and/or after and/or during the application of the foil and/or the irradiation by the laser.

## Revendications

1. Procédé de revêtement de pièces métalliques (10), comprenant :
- mettre à disposition une pièce métallique en un premier matériau métallique,
- poser une feuille (20) d'un deuxième matériau métallique sur la pièce métallique dans une zone d'appui (12),
- irradier la feuille reposant sur la pièce métallique dans au moins une partie de la zone d'appui avec un laser, où la zone d'appui de la pièce métallique a un trou (14) et est au moins partiellement une zone de vissage,
- lier par liaison par matière la feuille reposant avec la pièce métallique dans la zone d'appui,
**caractérisé par**
- vaporiser la feuille par le laser dans la zone du contour du trou.

2. Procédé selon la revendication 1,
**caractérisé en ce que**
- la feuille est refondue par le laser, au moins par zones, dans une surface de soudage, en particulier pour former une liaison par matière avec la pièce métallique.

3. Procédé selon l'une des revendications précédentes,
**caractérisé en ce que**
- la feuille est plus petite que la zone d'appui ou la feuille est plus grande que la zone d'appui ou la surface de la feuille correspond essentiellement à la surface de la zone d'appui.

4. Procédé selon l'une des revendications précédentes,
**caractérisé en ce que**
- la surface de soudage constitue une partie de la zone d'appui ou la surface de soudage remplit essentiellement toute la zone d'appui.

5. Procédé selon l'une des revendications précédentes,
**caractérisé en ce que**
- le premier matériau métallique est différent du deuxième matériau métallique et/ou que le premier matériau métallique coïncide avec le deuxième matériau métallique.

6. Procédé selon l'une des revendications précédentes,
**caractérisé en ce que**
- le laser est un laser à impulsions ultracourtes, en particulier un laser Nd:YAG, CO2 ou à diode.

7. Procédé selon l'une des revendications précédentes,
**caractérisé en ce que**
- des évidements de la pièce métallique sont découpés par le laser dans la zone d'appui et/ou que le contour extérieur de la feuille est découpé par le laser.

8. Procédé selon l'une des revendications précédentes,
**caractérisé en ce que**
- la pièce métallique est une cosse de câble.

9. Procédé selon l'une des revendications précédentes,
**caractérisé en ce que**
- le feuille est chauffé à une température proche du point de fusion lors de la mise en place.

10. Procédé selon l'une des revendications précédentes,
**caractérisé en ce que**
- a une structuration dans la zone d'appui, en particulier qu'une ou plusieurs protubérances, en particulier des boutons de position, sont disposées dans la zone d'appui.

11. Procédé selon l'une des revendications précédentes,
**caractérisé en ce que**
- la zone d'appui est parcourue par le laser au moins en partie dans une trame de positions de soudage réparties régulièrement dans l'espace et la feuille est irradié et/ou déformé à des positions de soudage dans une zone essentiellement ponctuelle et/ou la zone d'appui est parcourue en continu par le laser au moins en partie dans une ligne continue et le film est irradié et/ou déformé le long de la ligne.

12. Procédé selon l'une des revendications précédentes,
**caractérisé en ce que**
- la feuille est formée de nickel, d'étain, d'argent, d'or ou d'alliages de ceux-ci.

13. Procédé selon l'une des revendications précédentes,
**caractérisé en ce que**
- **la** pièce métallique est formée de cuivre, d'un alliage de cuivre, d'aluminium ou d'un alliage d'aluminium.

14. Procédé selon l'une des revendications précédentes,
**caractérisé en ce que**
- au moins une deuxième feuille est appliquée par laser sur la pièce métallique au moins dans une deuxième surface de soudage, où la première surface de soudage et la deuxième surface de soudage ne se chevauchent pas ou se chevauchent au moins partiellement.

15. Procédé selon l'une des revendications précédentes,
**caractérisé en ce que**
- un gaz de protection entoure au moins une partie de la zone d'appui avant et/ou après et/ou pendant poser la feuille et/ou pendant l'irradiation par le laser.
